# EUROPÄISCHE PATENTSCHRIFT

(11) **EP 2 484 521 B1**
(45) Veröffentlichungstag und Bekanntmachung des Hinweises auf die Patenterteilung: **15.06.2016**
(21) Anmeldenummer: 12166479.1
(22) Anmeldetag: 09.11.2006
(51) Int. Cl.: B32B 37/12, B32B 37/18, B32B 37/22, B32B 37/02

(54) **Verfahren zum Aufbringen einer Folie auf einen Träger**
Methof for application of a film on a substrate
Méthode d'application d'un film sur un substrat

(30) Priorität: 23.12.2005 DE 102005062396
(43) Veröffentlichungstag der Anmeldung: 08.08.2012
(62) Teilanmeldung aus: 06818064.5
(73) Patentinhaber: Atlantic Zeiser GmbH, 78576 Emmingen (DE)
(72) Erfinder: Berndtsson, Anders, 42934 Kullavik (SE)
(74) Vertreter: Patent- und Rechtsanwälte Ullrich & Naumann

(56) Entgegenhaltungen:
- WO-A-01/87599
- WO-A-2004/011256
- DE-A1- 2 817 917
- US-A1- 5 466 013
- US-A1- 2002 027 586

## Beschreibung

Die Erfindung betrifft ein Verfahren zum Aufbringen einer Folie auf einen bedruckten Träger aus Kunststoff, wobei der Träger irreversibel mit der Folie zumindest partiell überzogen wird.

Es geht hier um die Verarbeitung flächiger Träger mit darauf befindlichen Informationen, wobei der Träger zumindest partiell mit einer Folie überzogen bzw. beschichtet wird. Dabei kann es sich um sogenannte Kunststoffkarten handeln, wie sie beispielsweise als permanente Eintrittskarten mit zusätzlichem Magnetstreifen, Transponder oder dgl. Verwendung finden. Mittlerweile nutzen unterschiedlichste Einrichtungen und Organisationen entsprechende Karten, beispielsweise Banken, Videotheken, Buchclubs, Fitnesscenter, etc.

Regelmäßig werden Karten der hier in Rede stehenden Art mit Informationen jedweder Art bedruckt. Im einfachsten Falle mittels Drucker oder Kopiergerät.
Der voranstehend genannte Stand der Technik ist aus der Praxis hinlänglich bekannt. Üblicherweise wird der Träger nach dem Bedrucken und/oder nach Ausstattung mit sonstigen optisch und/oder elektronisch lesbaren Informationen mit einer durchsichtigen Folie abgedeckt. Um diese Folie irreversibel auf den Träger aufzubringen, wird ein Verfahren angewandt, wonach ein durchsichtiger Schmelzklebstoff bei recht hoher Temperatur zwischen dem Träger und der Folie adhäsiv wirkt. Meist befindet sich der durchsichtige Klebstoff auf der Folie, die unter Temperatur- und Druckeinwirkung auf den Träger aufgepresst wird.

Die Anwendung relativ hoher Temperaturen ist in der Praxis jedoch problematisch, da die dadurch erzielte Haftung aufgrund der sich einstellenden Grenzflächenenergie oft nur unzureichend ist. Außerdem wird durch das Aufheizen wie auch durch das Abkühlen insbesondere die automatische Fertigung verlangsamt. So handelt es sich bei der Erwärmung und beim Abkühlen um zeitkritische Verfahrensschritte, die außerdem einen ganz erheblichen apparativen Aufwand erfordern. Ein laminierter Träger bzw. eine so hergestellte beschichtete Kunststoffkarte kann erst nach dem Abkühlen gehandhabt werden. Auch bei einer Einzelfertigung, so bspw. in einer Videothek, ist dies problematisch, verursacht das Aufheizen und Abkühlen erhebliche Wartezeiten. Außerdem besteht bei Temperaturanwendung jedenfalls dann eine Verletzungsgefahr, wenn die dazu dienende Vorrichtung unsachgemäß bedient wird. Schließlich ist der Energieverbrauch einer entsprechenden Vorrichtung erheblich.

Aus DE 28 17 917 A1 ist ein gattungsbildendes Verfahren zum Aufbringen einer Kaschierung auf ein vorzugsweise bedrucktes Trägermaterial in Form von Kunststoffkarten bekannt. Dabei wird das Trägermaterial zumindest auf einer Seite vollflächig kaschiert. Das Trägermaterial lässt sich jedoch nur in seiner Gesamtheit kaschieren. Aussparungen oder teilweises Kaschieren ist nicht vorgesehen. Aufgrund der konstruktiven Ausführung der dazu verwendeten Vorrichtung und unter Zugrundelegung des bekannten Kaschierverfahrens wäre eine bereichsweise Kaschierung bspw. mit Mustern oder Aussparungen nur durch äußerst aufwändiges Vorschneiden der endlos zugeführten perforierten Folie und ein danach erfolgendes synchronisiertes Auftragen der Folie möglich. Sowohl die Fertigung als auch die Handhabbarkeit einer Folie mit Mustern oder Aussparungen ist aufgrund der geringen Formstabilität und der reduzierten Zugfestigkeit einer Folie abermals aufwändig.

WO 2004/011256 A1 zeigt ein Verfahren zum Aufbringen einer Folie auf einen vorzugsweise bedruckten Träger aus Kunststoff, wobei der Träger irreversibel mit der Folie überzogen wird. Die als Rolle vorgehaltene Folie und der Träger werden zusammengeführt und durch beheizte Rollen unter Hitzeeinwirkung verbunden. Die Folie ist in vorkonfektionierte Abschnitte mit Trennstellen unterteilt, die an die Träger angepasst sind. Durch einen Niederhalter werden die Abschnitte der Folie auf den Träger gedrückt. Ein Schneidvorgang der Folie entfällt. Dies führt zu einem konstruktiv einfachen Aufbau in der gezeigten Vorrichtung.

Zwar kann mit dem bekannten Verfahren eine gezielte Kaschierung von Kunststoffkarten erfolgen, allerdings ist dabei nachteilig, dass die Prozessgeschwindigkeit auf Grund der Art der Folienführung und des Laminiervorgangs durch die beheizten Rollen eingeschränkt ist. Zudem setzt eine passgenaue Positionierung der perforierten Folienabschnitte eine definierte Steifigkeit des Trägermaterials sowie eine präzise Führung des Niederhalters voraus.

WO 01/87599 A1 zeigt ein Verfahren zum Aufbringen einer Folie auf einen Papierbogen, wobei die Bögen einander überlappend kaschiert werden. Anschließend findet ein Trennen bzw. Auseinanderschneiden statt, wobei vor dem Schneiden Überlappungskanten detektiert werden. Bei diesem Verfahren ist wesentlich, dass die zur Kaschierung dienende Folie einseitig mit Klebstoff beschichtet und danach über eine Kaschierwalze auf die einander überlappenden Papierbögen aufgebracht wird. Dies ist in der Handhabung der Folie aufwändig, zumal die Folie in sich wenig Stabilität bzw. Steifigkeit hat. Will man die Folie mit einem Haftvermittler beschichten, ist eine besondere aufwändige Technik erforderlich, um nämlich beim Beschichten einen Gegendruck auf der der Beschichtungsseite abgewandten Seite der Folie zu bewirken. Außerdem besteht die Gefahr der Beschädigung der Folie, jedenfalls dann, wenn es sich dabei um eine äußerst dünne Folie handelt. Weiter ist die Handhabung der bereits beschichten Folie, aufgrund ihrer nur geringen Formstabilität, abermals aufwändig, so dass es zwingend erforderlich ist, die mit Haftvermittler beschichtete Folie unverzüglich der Fügestation bzw. der Kaschierungsstation zuzuführen, und dies äußerst schonend.

Der Lehre der vorliegenden Anmeldung liegt nun die Aufgabe zugrunde, das zuvor gattungsbildende Verfahren derart auszugestalten und weiterzubilden, dass mit geringstmöglichem konstruktivem Aufwand und bei geringer Taktzeit ein zuverlässiges Aufbringen der Folie auf den Träger möglich ist.

Das beanspruchte, durch den Anspruch 1 beschriebene Verfahren, das die zuvor aufgezeigte Aufgabe löst, umfasst folgende Verfahrensschritte:
Bereitstellen des Trägers,
Beschichten des Trägers mit einer dünnen Schicht eines transparenten, unter Einwirkung elektromagnetischer Wellen aushärtenden Haftvermittlers, Zusammenbringen von Träger und Folie, wobei die Folie bereichsweise, in bzw. mit Mustern oder mit Aussparungen auf den Träger aufgebracht wird und
Aushärten des Haftvermittlers unter Einwirkung elektromagnetischer Wellen, insbesondere unter Lichteinwirkung.

In erfindungsgemäßer Weise ist zunächst erkannt worden, dass es von besonderem Vorteil ist, den Träger und die Folie derart zu verbinden, dass auf den Träger zunächst eine dünne Schicht von unter Einwirkung elektromagnetischer Wellen aushärtendem Haftvermittler aufgebracht wird. Ein Aushärten des Haftvermittlers erfolgt anschließend unter Einwirkung elektromagnetischer Wellen, insbesondere unter Lichteinwirkung. Hiermit wird eine Einwirkung ohne oder mit lediglich geringer Temperaturerhöhung erreicht. Ein starkes Erhitzen von Träger und Folie und ein danach zwingend erforderliches Abkühlen vor einer Weiterverarbeitung sind vermieden. Eine geringe Taktzeit lässt sich erreichen. In weiter erfindungsgemäßer Weise ist zudem erkannt worden, dass es sich bei dem Träger um ein Substrat jedweder Art handeln kann und somit auch Kunststoffe mit dem unter Einwirkung elektromagnetischer Wellen aushärtenden Haftvermittler auf zuverlässige Weise mit einer Folie verbunden werden können.

Mit dem erfindungsgemäßen Verfahren kann durch die mit Aussparungen oder Mustern versehene Folie ein Träger gezielt entsprechend den tatsächlichen Bedürfnissen kaschiert werden. So lässt sich ein mit Informationen bedruckter Bereich kaschieren und durch die Folie schützen, wobei gleichzeitig Funktionsflächen wie beispielsweise Magnetstreifen oder Chipfelder freigehalten werden können.

Außerdem ist ein Verfahren zum Aufbringen einer Folie auf einen bedruckten Träger aus Kunststoff angegeben, wonach mit geringstmöglichem konstruktivem Aufwand und bei geringer Taktzeit ein zuverlässiges Aufbringen der Folie auf den Träger gewährleistet ist.

Alternativ ist es denkbar, eine bereits mit dem transparenten Haftvermittler beschichtete Folie bereitzustellen, wobei auch dort der Haftvermittler unter Einwirkung elektromagnetischer Wellen aushärtet.

An dieser Stelle sei angemerkt, dass der Haftvermittler grundsätzlich unter Einwirkung elektromagnetischer Wellen aushärtet, wobei es sich dabei insbesondere um eine Lichteinwirkung handelt. In Abgrenzung zu der Aushärtung durch Temperatureinwirkung sei angemerkt, dass es hier um eine Einwirkung ohne Temperaturerhöhung oder bei nur geringer Temperaturerhöhnung des Trägers geht. Insoweit unterscheidet sich das Verfahren von einem herkömmlichen Verfahren unter Anwendung hoher Temperaturen.

Wesentlich ist, dass der Träger und die Folie - in welcher geometrischen Anordnung auch immer - zusammengebracht werden. Im zusammengebrachten Zustand findet ein Verkleben zwischen der Folie und dem Träger statt, wobei der Haftvermittler unter Einwirkung elektromagnetischer Wellen aushärtet. Eine irreversible Abdeckung des Trägers durch die Folie ist geschaffen, wobei die auf dem Träger befindlichen Informationen durch die transparente Folie hindurch sichtbar sind.

Es sei weiter angemerkt, dass es sich bei dem Haftvermittler um einen Klebstoff jedweder Art handeln kann der beispielsweise unter Lichteinwirkung aushärtet. So handelt es sich bei dem Haftvermittler um einen Klebstoff, der - mehr oder weniger - im kalten Zustand aushärtet, im Gegensatz zu den aus der Praxis bekannten Anwendungen, wonach der Haftvermittler unter Temperatureinfluss aushärtet.

Wesentlich ist, dass die Folie nur bereichsweise auf den Träger aufgebracht wird. So lassen sich mit dem Material der Folie Muster bzw. Konturen realisieren. Des Weiteren lässt sich die Folie mit Aussparungen auf den Träger aufbringen, und zwar entsprechend dem jeweiligen Bedarf.

In ganz besonders vorteilhafter Weise wird der Haftvermittler drucktechnisch auf den Träger oder auf die Folie oder auf beide - Träger und Folie - aufgebracht. Als Druckverfahren lässt sich das Rotationsdruckverfahren, vorzugsweise der Flexordruck - anwenden. Ebenso kommt als Druckverfahren der Siebdruck in Frage.

Auch ist es denkbar, ein Strahlverfahren zum Aufbringen des Haftvermittlers anzuwenden, wobei es sich dabei vorzugsweise um ein Strahlverfahren handelt, welches dem sogenannten Tintenstrahlverfahren bei Tintenstrahldruckern ähnelt.

Das Aufbringen des Haftvermittlers kann in einer besonderen Klebestation erfolgen. Dazu ist es denkbar, dass der Träger vorzugsweise linear der Klebestation zugeführt wird, um dort nämlich auf der zu beschichtenden bzw. mit Folie zu überdeckenden Seite mit dem Haftvermittler vollflächig versehen zu werden. Danach oder alternativ wird der Träger ebenfalls wieder vorzugsweise linear einer der Klebestation nachgeordneten Fügestation zugeführt, wo die Folie auf den Träger unter Wirkung des Haftvermittlers aufgebracht wird.

In Bezug auf die Folie ist es denkbar, dass diese kontinuierlich als Folienband zur Verfügung gestellt wird. Die zum Abdecken dienende Folie könnte auf das Folienband - proportioniert bzw. dimensioniert - aufgebracht sein. Entsprechend ist es denkbar, dass das die Folie tragende Folienband der Klebestation zum Beschichten mit dem Haftvermittler zugeführt wird, so dass dort der Haftvermittler aufgebracht wird. Dies kann anstelle des Aufbringens des Haftvermittlers auf den Träger oder zusätzlich dazu erfolgen.

In einem nächsten Schritt wird die Folie - vorzugsweise kontinuierlich als Folienband - der Fügestation zur Über- oder Unterdeckung des Trägers zugeführt. Dabei sei angemerkt, dass es auch möglich ist, der Fügestation beidseits des Trägers eine Folie über ein Folienband zuzuführen, um nämlich eine beidseitige Beschichtung des Trägers mit Folie herbeizuführen. Jedenfalls ist es dabei von Vorteil, wenn die Folie über einen bandförmigen Folienträger möglicherweise zuerst der Klebestation und dann auf jeden Fall der Fügestation zugeführt wird. Die auf dem Folienträger angeordnete Folie könnte dabei von einer zur Bevorratung dienenden Rolle abgewickelt und gegebenenfalls der Klebestation und danach der Fügestation zugeführt werden.

Noch einmal sei darauf hingewiesen, dass zum Verkleben von Träger und Folie ein Haftvermittler verwendet wird, der unter Einwirkung elektromagnetischer Wellen, insbesondere unter Lichteinwirkung, aushärtet. Dabei spielt es zunächst keine Rolle, wo und wie der Haftvermittler aufgebracht wird. So ist es ohne weiteres auch denkbar, dass sich der Haftvermittler bereits auf der Folienoberfläche befindet, nämlich auf der dem Folienträger abgewandten und dem Träger zugewandten Seite, so dass die Folie bereits mit dem Haftvermittler versehen von der Rolle abgewickelt und der Fügestation zugeführt werden kann.

In einem weiteren Schritt wird die Anordnung des Trägers mit der auf dem Träger aufgebrachten Folie und dem dazwischen befindlichen Haftvermittler mit zumindest geringer Presskraft verpresst. Zum Verpressen können einander gegenüberliegende Rollenpaare oder auch flächige Pressstempel verwendet werden. Nach dem Verpressen, oder auch während des Verpressens, oder aber auch zwischen einzelnen Schritten des Verpressens wird die Anordnung des Trägers mit der auf dem Träger aufgebrachten Folie und dem dazwischen befindlichen Haftvermittler vorzugsweise durch den Folienträger und die Folie hindurch einer Bestrahlung mit elektromagnetischen Wellen, insbesondere mit Licht, ausgesetzt. Zur Bestrahlung wird in idealer Weise UV-Licht verwendet. Auch ist es denkbar, die Härtung des Haftvermittlers zunächst nur teilweise vorzunehmen, danach die Anordnung abermals zu verpressen und anschließend eine weitere Bestrahlung und damit eine endgültige Härtung herbeizuführen. Beliebige Sequenzen der einzelnen Arbeitsschritte sind denkbar.

Die Folie kann in Einzelstücken zur Verfügung gestellt werden, so dass diese der Klebestation und/oder der Fügestation -jeweils einzeln - zugeführt wird.

Sofern die zur Beschichtung dienende Folie über einen Folienträger zur Verfügung gestellt wird, ist es von besonderem Vorteil, wenn der Folienträger vor, während oder nach dem Aushärten des Haftvermittlers von der mit dem Träger verbundenen Folie abgehoben wird. So lässt sich der Folienträger als Endlosband von der Anordnung bzw. von dem Träger abheben und auf eine nachfolgende Rolle zum Zwecke der Entsorgung aufwickeln. Parallel dazu wird der beschichtete Träger zur weiteren Handhabung und/oder Bearbeitung vorzugsweise linear weiter gefördert.

Des Weiteren ist es denkbar, dass die Folie vor dem Aufbringen auf den Träger bearbeitet wird. So könnte die Folie gelasert, perforiert, geprägt oder sonst wie behandelt werden. Insbesondere ist es denkbar, dass die Folie vor dem Aufbringen auf den Träger, vorzugsweise auf der dem Träger zugewandten Seite, bedruckt wird.

Bereits zuvor ist erwähnt worden, dass üblicherweise der Träger mit drucktechnisch aufgebrachten Informationen ausgestattet ist, die durch die Folie zu schützen sind. So ist es möglich, vor dem Zusammenbringen von Träger und Folie, vor allem aber auch vor einer Beschichtung des Trägers mit dem Haftvermittler, den Träger auf beliebige Art und Weise zu bedrucken oder mit elektronischen Informationen auszustatten. Alternativ dazu oder ergänzend ist es denkbar, dass die zur Beschichtung dienende Folie vor dem Aufbringen auf dem Träger, vorzugsweise auf der dem Träger zugewandten Seite, bedruckt wird. Diese Informationen können sich mit den auf der Karte befindlichen Informationen ergänzen oder stattdessen vorgesehen sein. Auch ist es denkbar, dass zwischen dem Träger und der Folie - vor dem Zusammenbringen von Träger und Folie - möglichst dünne flächige Teile eingelegt bzw. positioniert und durch die Folie auf dem Träger fixiert werden. Die Anordnung beliebiger flächiger Teile ist denkbar, so bspw. die Anordnung eines Bildes oder aber auch einer äußerst flachen elektronischen Schaltung, einer Spule, etc.

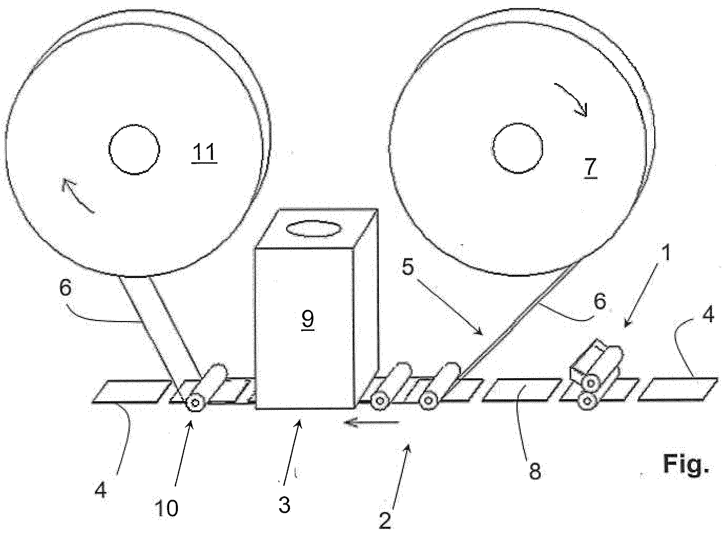

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- die einzige Fig.: in einer schematischen Ansicht die grundsätzliche Anordnung einer Vorrichtung, mit der sich das erfindungsgemäße Verfahren erläutern lässt.

Gemäß der einzigen Fig. umfasst die Vorrichtung eine Klebestation 1, eine Fügestation 2 und eine Härtestation 3.

Des Weiteren lässt die einzige Fig. erkennen, dass die zur Beschichtung des Trägers 4 dienende Folie 5 über ein Folienband 6 bereitgestellt wird, welches von der zur Bevorratung der Folie 5 dienenden Rolle 7 abgewickelt wird. Von dort aus gelangt das Folienband 6 bzw. die darauf befindliche Folie 5 unmittelbar zu der Fügestation 2.

Der Träger 4 wird bei dem hier gezeigten Ausführungsbeispiel linear zu der Klebestation 1 gefördert, wird dort an seiner Oberfläche mit dem durchsichtigen Haftvermittler 8 drucktechnisch beschichtet und wird von dort aus der Fügestation 2 zugeführt, in der die Kombination des Trägers 4 mit der Folie 5 erfolgt.

Nach dem Aufbringen der Folie 5 auf den Träger 4 (mit dem dazwischen befindlichen Haftvermittler 8) wird die so entstandene Anordnung verpresst.

Anschließend erfolgt in der Härtestation 3 eine Bestrahlung durch eine UV-Lichtquelle 9. Dort härtet der Haftvermittler 8 unter Bindung der Folie 5 an den Träger 4 aus, so dass in einer nachgeschalteten Trennstation 10 das Folienband 6 von der Folie 5 bzw. dem Träger 4 durch Umlenkung abhebbar ist. Von dort aus gelangt das Folienband 6 auf eine zur Entsorgung dienende Rolle 11, mit der das aufgewickelte Folienband 6 entsorgt werden kann. Der mit der Folie 5 beschichtete Träger 4 wird zur weiteren Bearbeitung und/oder Handhabung weiter gefördert.

Im Hinblick auf weitere Merkmale, die sich der einzigen Fig. nicht entnehmen lassen, sei zur Vermeidung von Wiederholungen auf den allgemeinen Teil der Beschreibung und auf die Patentansprüche verwiesen.

Schließlich sei angemerkt, dass das voranstehend erörterte Ausführungsbeispiel der beispielhaften Erörterung der beanspruchten Lehre dient, diese jedoch nicht auf das Ausführungsbeispiel einschränkt.

## Patentansprüche

1. Verfahren zum Aufbringen einer Folie (5) auf einen bedruckten Träger (4) aus Kunststoff, wobei der Träger (4) irreversibel mit der Folie (5) zumindest partiell überzogen wird,
mit folgenden Verfahrensschritten:
Bereitstellen des Trägers (4),
Beschichten des Trägers (4) mit einer dünnen Schicht eines transparenten, unter Einwirkung elektromagnetischer Wellen aushärtenden Haftvermittlers (8),
Zusammenbringen von Träger (4) und Folie (5), und
Aushärten des Haftvermittlers (8) unter Einwirkung elektromagnetischer Wellen, insbesondere unter Lichteinwirkung,
**dadurch gekennzeichnet, dass** die Folie (5) bereichsweise in bzw. mit Mustern oder mit Aussparungen auf den Träger (4) aufgebracht wird.

2. Verfahren nach Anspruch 1, **dadurch gekennzeichnet, dass** der Haftvermittler (8) drucktechnisch, vorzugsweise mittels
Rollenrotationsverfahren, insbesondere mittels Flexodruck oder mittels Siebdruck oder mittels
Strahlverfahren, vorzugsweise ähnlich dem Tintenstrahlverfahren, auf den Träger (4) oder auf die Folie (5) aufgebracht wird.

3. Verfahren nach Anspruch 1 oder 2, **dadurch gekennzeichnet, dass** das Aufbringen des Haftvermittlers (8) in einer Klebestation erfolgt, wobei
der Träger (4) vorzugsweise linear der Klebestation zum Beschichten mit dem Haftvermittler (8) zugeführt wird und/oder wobei
dass der Träger (4), vorzugsweise linear, einer ggf. der Klebestation (1) nachgeordneten Fügestation (2) zugeführt wird.

4. Verfahren nach Anspruch 3, **dadurch gekennzeichnet, dass** die Folie (5) in Einzelstücken der Klebestation zum Beschichten mit dem Haftvermittler (8) oder
vorzugsweise kontinuierlich als Folienband (6), der Klebestation (1) zum Beschichten mit dem Haftvermittler (8) zugeführt wird.

5. Verfahren nach Anspruch 3 oder 4, **dadurch gekennzeichnet, dass** die Folie in Einzelstücken oder
vorzugsweise kontinuierlich als Folienband (6) der Fügestation (2) zur Überoder Unterdeckung des Trägers zugeführt wird.

6. Verfahren nach einem der Ansprüche 3 bis 5, **dadurch gekennzeichnet, dass** die Folie (5) über einen bandförmigen Folienträger ggf. der Klebestation (1) und der Fügestation (2) zugeführt wird und/oder
dass die Folie (5) von einer zur Bevorratung dienenden Rolle (7) abgewickelt und ggf. der Klebestation (1) und der Fügestation (2) zugeführt wird, wobei die Folie (5) auf der dem Folienträger abgewandten und dem Träger (4) zugewandten Seite mit dem Haftvermittler (8) beschichtet sein kann.

7. Verfahren nach einem der Ansprüche 1 bis 6, **dadurch gekennzeichnet, dass** die Anordnung des Trägers mit der auf dem Träger (4) aufgebrachten Folie (5) und dem dazwischen befindlichen Haftvermittler (8) mit zumindest geringer Presskraft verpresst wird.

8. Verfahren nach einem der Ansprüche 1 bis 7, **dadurch gekennzeichnet, dass** die Anordnung des Trägers (4) mit der auf dem Träger (4) aufgebrachten Folie (5) und dem dazwischen befindlichen Haftvermittler (8), vorzugsweise durch den Folienträger und die Folie (5) hindurch, einer Bestrahlung mit elektromagnetischen Wellen, vorzugsweise mit Licht, ausgesetzt wird, wobei
zur Bestrahlung UV-Licht verwendet werden kann.

9. Verfahren nach einem der Ansprüche 1 bis 8, **dadurch gekennzeichnet, dass** der Folienträger vor, während oder nach dem Aushärten des Haftvermittlers (8) von der mit dem Träger (4) verbundenen Folie (5) abgehoben wird, wobei
der Folienträger nach Abgabe der Folie (5) auf einer nachfolgenden Rolle (7) zum Zwecke der Entsorgung aufgewickelt werden kann.

10. Verfahren nach einem der Ansprüche 1 bis 9, **dadurch gekennzeichnet, dass** der mit der Folie (5) beschichtete Träger (4) zur weiteren Bearbeitung oder Handhabung weiter gefördert wird und/oder
dass der Träger (4) vor der Beschichtung bedruckt wird.

11. Verfahren nach einem der Ansprüche 1 bis 10, **dadurch gekennzeichnet, dass** die Folie (5) vor dem Aufbringen auf den Träger (4) bearbeitet wird, wobei
die Folie (5) gelasert, perforiert, geprägt oder sonst wie behandelt werden kann.

12. Verfahren nach einem der Ansprüche 1 bis 11, **dadurch gekennzeichnet, dass** die Folie (5) vor dem Aufbringen auf den Träger (4), vorzugsweise auf der dem Träger (4) zugewandten Seite, bedruckt wird.

13. Verfahren nach einem der Ansprüche 1 bis 12, **dadurch gekennzeichnet, dass** mit dem Aufbringen der Folie (5) flächige Teile eingebunden werden.

14. Verfahren nach Anspruch 13, **dadurch gekennzeichnet, dass** es sich bei den flächigen Teilen um Informationsträger jedweder Art handelt, bspw. umfassend Schriften, Bilder, Hologramme, Spulen, Transponder, etc.

## Claims

1. Method for applying a film (5) to a printed carrier (4) of plastics material, wherein the carrier (4) is irreversibly coated with the film (5) at least in part, comprising the following method steps:
providing the carrier (4),
coating the carrier (4) with a thin layer of a transparent adhesion promoter (8) which cures under the action of electromagnetic waves,
bringing the carrier (4) and the film (5) together, and
curing the adhesion promoter (8) under the action of electromagnetic waves, in particular under the action of light,
**characterised in tha**t the film (5) is applied to the carrier (4) in regions in or with patterns or with cut-outs.

2. Method according to claim 1, **characterised in that** the adhesion promoter (8) is applied to the carrier (4) or to the film (5) by printing technology, preferably by means of
web-fed rotary processes, in particular by means of flexographic printing or by means of screen printing or by means of
jet processes, preferably similar to the inkjet process.

3. Method according to claim 1 or 2, **characterised in that** the adhesion promoter (8) is applied in an gluing station, wherein
the carrier (4) is fed preferably in a linear manner to the gluing station for coating with the adhesion promoter (8), and/or wherein
the carrier (4) is fed, preferably in a linear manner, to a joining station (2) optionally arranged downstream of the gluing station (1).

4. Method according to claim 3, **characterised in that** the film (5) is fed to the gluing station for coating with the adhesion promoter (8) in individual pieces or preferably is fed to the gluing station (1) for coating with the adhesion promoter continuously as a film strip (6).

5. Method according to claim 3 or 4, **characterised in that** the film is fed to the joining station (2) for covering the top side or the underside of the carrier in individual pieces or
preferably continuously as a film strip (6).

6. Method according to any one of claims 3 to 5, **characterised in that** the film (5) is fed optionally to the gluing station (1) and to the joining station (2) *via* a strip-shaped film carrier and/or
**in that** the film (5) is unwound from a roll (7) serving as the supply and is fed optionally to the gluing station (1) and the joining station (2), wherein
the film (5) can be coated with the adhesion promoter (8) on the side remote from the film carrier and on the side facing the carrier (4).

7. Method according to any one of claims 1 to 6, **characterised in that** the arrangement of the carrier with the film (5) applied to the carrier (4) and the adhesion promoter (8) situated therebetween is pressed with at least a slight pressing force.

8. Method according to any one of claims 1 to 7, **characterised in that** the arrangement of the carrier (4) with the film (5) applied to the carrier (4) and the adhesion promoter (8) therebetween is exposed to irradiation with electromagnetic waves, preferably with light, preferably through the film carrier and the film (5), wherein UV light can be used for the irradiation.

9. Method according to any one of claims 1 to 8, **characterised in that** the film carrier is removed from the film (5) bonded to the carrier (4) before, during or after curing of the adhesion promoter (8), wherein
after the film (5) has been delivered, the film carrier can be wound on a subsequent roller (7) for the purposes of disposal.

10. Method according to any one of claims 1 to 9, **characterised in that** the carrier (4) coated with the film (5) is conveyed further for further processing or handling and/or in that the carrier (4) is printed before it is coated.

11. Method according to any one of claims 1 to 10, **characterised in that** the film (5) is processed before being applied to the carrier (4), wherein
the film (5) can be treated with a laser, perforated, embossed or otherwise treated.

12. Method according to any one of claims 1 to 11, **characterised in that** the film (5) is printed before being applied to the carrier (4), preferably on the side facing the carrier (4).

13. Method according to any one of claims 1 to 12, **characterised in that** planar parts are included with the application of the film (5).

14. Method according to claim 13, **characterised in that** the planar parts are information carriers of any kind, for example including lettering, images, holograms, coils, transponders, etc.

## Revendications

1. Procédé d'application d'un film (5) sur un support imprimé (4) en matière plastique, le support (4) étant recouvert de manière irréversible au moins partiellement avec le film (5),
comprenant les étapes suivantes :
préparation du support (4),
revêtement du support (4) avec une couche mince d'un promoteur d'adhérence (8) transparent durcissant sous l'effet d'ondes électromagnétiques, assemblage du support (4) et du film (5), et
durcissement du promoteur d'adhérence (8) sous l'effet d'ondes électromagnétiques, plus particulièrement sous l'effet de la lumière,
**caractérisé en ce que** le film (5) est appliqué sur certaines parties dans ou avec des modèles ou avec des évidements sur le support (4).

2. Procédé selon la revendication 1, **caractérisé en ce que** le promoteur d'adhérence (8) est appliqué à l'aide d'une technique d'impression, de préférence au moyen d'un procédé de rotation de rouleaux, plus particulièrement par flexographie ou par sérigraphie ou à l'aide d'un procédé de rayonnement, de préférence similaire au procédé de jet d'encre, sur le support (4) ou sur le film (5).

3. Procédé selon la revendication 1 ou 2, **caractérisé en ce que** l'application du promoteur d'adhérence (8) a lieu dans une station de collage,
le support (4) étant introduit de préférence de manière linéaire pour le revêtement avec le promoteur d'adhérence (8) et/ou
le support (4) est introduit, de préférence de manière linéaire, dans une station d'assemblage (2) située en aval de la station de collage (1).

4. Procédé selon la revendication 3, **caractérisé en ce que** le film (5) est introduit par morceaux dans la station de collage pour le revêtement avec le promoteur d'adhérence (8) ou de préférence de manière continue sous la forme d'une bande de film (6), dans la station de collage (1) pour le revêtement avec le promoteur d'adhérence (8).

5. Procédé selon la revendication 3 ou 4, **caractérisé en ce que** le film est introduit par morceaux ou de préférence de manière continue sous la forme d'une bande de film (6) dans la station d'assemblage (2) pour le recouvrement supérieur ou inférieur du support.

6. Procédé selon l'une des revendications 3 à 5, **caractérisé en ce que** le film (5) est introduit par l'intermédiaire d'un support de film en forme de bande, le cas échéant dans la station de collage (1) et dans la station d'assemblage (2) et/ou
**en ce que** le film (5) est déroulé par un rouleau (7) servant de réserve et est introduit, le cas échéant, dans la station de collage (1) et dans la station d'assemblage (2), le film (5) pouvant être revêtu avec le promoteur d'adhérence (8) sur le côté opposé au support de film et orienté vers le support (4).

7. Procédé selon l'une des revendications 1 à 6, **caractérisé en ce que** la disposition du support avec le film (5) appliqué sur le support (4) et le promoteur d'adhérence (8) se trouvant entre eux, est comprimé au moins avec une force de compression faible.

8. Procédé selon l'une des revendications 1 à 7, **caractérisé en ce que** la disposition du support (4) avec le film (5) appliqué sur le support (4) et le promoteur d'adhérence (8) se trouvant entre eux, de préférence à travers le support de film et le film (5), est exposée à une irradiation avec des ondes électromagnétiques, de préférence de la lumière, des rayons UV pouvant être utilisés pour l'irradiation.

9. Procédé selon l'une des revendications 1 à 8, **caractérisé en ce que** le support de film est soulevé avant, pendant ou après le durcissement du promoteur d'adhérence (8), du film (5) lié avec le support (4),
le support de film pouvant être enroulé, après la sortie du film (5), sur un rouleau suivant (7) afin de permettre son élimination.

10. Procédé selon l'une des revendications 1 à 9, **caractérisé en ce que** le support (4) revêtu avec le film (5) est transporté plus loin pour un traitement et une manipulation ultérieure et/ou **en ce que** le support (4) est imprimé avant le revêtement.

11. Procédé selon l'une des revendications 1 à 10, **caractérisé en ce que** le film (5) est traité avant l'application sur le support (4), le film (5) pouvant être traité au laser, estampée ou traité d'une autre manière.

12. Procédé selon l'une des revendications 1 à 11, **caractérisé en ce que** le film (5) est imprimé avant l'application sur le support (4), de préférence sur le côté orienté vers le support (4).

13. Procédé selon l'une des revendications 1 à 12, **caractérisé en ce que** des pièces plates sont intégrées avec l'application du film (5).

14. Procédé selon la revendication 13, **caractérisé en ce que** les pièces plates peuvent être des supports d'informations de tous types, comprenant par exemple des inscriptions, des images, des hologrammes, des bobines, des transpondeurs, etc.
